# EUROPEAN PATENT SPECIFICATION

(11) **EP 2 705 270 B1**
(45) Date of publication and mention of the grant of the patent: **09.08.2017**
(21) Application number: 12725501.6
(22) Date of filing: 03.05.2012
(51) Int. Cl.: F16D 67/00, F16D 63/00

(54) **BRAKE GROUP FOR A TRANSMISSION BETWEEN A DRIVE SHAFT AND A DRIVEN SHAFT**
BREMSGRUPPE FÜR EINE ÜBERTRAGUNG ZWISCHEN EINER ANTRIEBSWELLE UND EINER ABTRIEBSWELLE
GROUPE FREIN POUR UNE TRANSMISSION ENTRE UN ARBRE MENANT ET UN ARBRE MENÉ

(30) Priority: 06.05.2011 IT BO20110251
(43) Date of publication of application: 12.03.2014
(73) Proprietor: GB S.r.l., 40069 Zola Predosa (Bologna) (IT)
(72) Inventor: GARDINI, Ivan, I-40069 Zola Predosa (Bologna) (IT); MALLIL, Youness, I-40041 Gaggio Montano (Bologna) (IT)
(74) Representative: Dall'Olio, Christian
(86) International application number: PCT/IB2012/052224
(87) International publication number: WO 2012/153244

(56) References cited:
- EP-A1- 1 308 644
- DE-A1- 10 214 419
- DE-B3- 10 317 547
- DE-C2- 10 025 720
- US-B1- 6 464 061

## Description

### FIELD OF THE INVENTION

The present invention relates to the technical sector relative to a transmission between a drive shaft and a driven shaft; in particular, the invention relates to a brake group suitable for use in a transmission between a drive shaft and a driven shaft.

### DESCRIPTION OF THE PRIOR ART

A brake group for a transmission between a drive shaft and a driven shaft is known from document EP 1 308 644 belonging to the same applicant. More in general, this document discloses a gear box for connecting the output shaft of a tractor, in the following referred-to as the drive shaft, with a shaft, in the following referred-to as the driven shaft, of a user device, for example a lawn mower.

For reasons of safety, there is a need to guarantee the braking and halting within a certain time interval (a few seconds) of the user device activated by the tractor when the motor drawing the drive shaft is deactivated; the user device comprises masses to be drawn which increases the rotating inertia of the driven shaft, for which reason there is an additional need for an automatic braking of the driven shaft in order to reduce the halt times thereof once the engine drawing the drive shaft is deactivated.

The above-cited gear box of known type comprises: an input shaft connectable to the drive shaft; an output shaft connectable to the driven shaft; a first friction surface that is solidly constrained to the frame; a first rotatable member with respect to a first rotation axis and connectable to the driven shaft (via the output shaft) such as to draw the driven shaft in rotation with respect to the first rotation axis.

The first member and the second member are frictionally couplable to one another such that the relative angular position thereof and the relative distance thereof can be varied: to a first relative angular position corresponds a first relative drive transmission distance of the drive from the second member to the first member; to a second relative angular position corresponds a second relative braking distance.

The gear box further comprises a second friction surface which is mounted on the second member, and elastic means that press against the second member such as to ensure the friction coupling of the second member with the first member.

The gear box is configured such that when the angular velocity of the second member diminishes with respect to the angular velocity of the first member, the first member and the second member achieve the second reciprocal braking distance: in other words the second member slides along a parallel direction to the first rotation axis up until the second braking surface abuts against the first braking surface.

In more detail, the first member is a first conical cogwheel provided centrally with a first clutching surface.

A second conical cogwheel is fixed to the free end of the output shaft and enmeshes with the first conical cogwheel.

The second member is substantially a sleeve which conforms a second clutching surface.

The elastic means are a plurality of springs interposed between a ring, fixed to the input shaft, and the second member.

The first clutching surface and the second clutching surface are complementary to one another and are conformed such as to be able to slide with respect to one another such as to realise an angular staggering of the second member with respect to the first member; in fact they comprise inclined surfaces with respect to the first rotation axis which are of the ramp type. The relative sliding of these surfaces makes possible a relative staggering of the second member with respect to the first member and a contemporaneous sliding of the second member along a parallel direction to the first rotation axis.

Thanks to the first clutching surface and the second clutching surface, the first member and the second member realise a clutch for connecting the drive shaft and the driven shaft.

In a case of halting of the motor which activates the drive shaft, for example, the torque applied to the drive shaft rapidly and instantaneously decreases; the angular velocity of the drive shaft tends to decrease more rapidly than the angular velocity of the driven shaft, due to the greater inertia that the driven shaft has because of the rotating masses it draws.

As a consequence, a relative rotation of the second member with respect to the first member occurs: therefore, the second member staggers with respect to the first member and at the same time slides along the parallel direction to the first rotation axis; when the second member reaches the second reciprocal braking distance with respect to the first member, then the second friction surface mounted on the second member intercepts the first friction surface. The rubbing between the two friction surfaces determines the braking of the second member, of the input shaft and the drive shaft; the first member, the output shaft and the driven shaft are subjected to an "indirect" braking thanks to the coupling of the first clutching surface with the second surface. Consequently to the braking of the second member, the angular velocity of the second member decreases further, which induces a further staggering of the second member with respect to the first member and a further sliding of the second member along the parallel direction to the first rotation axis: thus, the braking of the second member increases progressively in intensity as the second friction surface presses with a growing force against the first friction surface, which determines a progressive increase in the corresponding braking torque.

Thus, following an initial braking of the drive shaft or following a deactivation of the engine drawing the drive shaft a further, immediately braking of the drive shaft with a growing intensity occurs. In other words a braking torque is created applied on the second member which is transmitted by means of the clutching surface to the first member and the driven member; this braking torque, as mentioned, progressively grows in intensity and leads to a further relative sliding of the clutching surfaces. The undesired effect that can be obtained is a wedging of the first clutching surface of the first member in the second clutching surface of the second member; after the halting of the drive shaft and the driven shaft the two clutching surfaces can be partially blocked and a considerable thrust torque force can be required on the part of the engine to induce a relative sliding of the clutching surfaces such that the second member reaches the first reciprocal motion transmission distance with respect to the first member.

On start-up the engine must therefore be boosted.

Document US 6.464.061 relates to a decoupling comprising two elements in rotation about a longitudinal axis, namely a rim and a hub, and also comprising a load support which ensures relative rotation between the rim and the hub, together with a torque transmission element positioned between the rim and hub, which comprises an elastic device deformable parallel to the longitudinal axis and comprising at least one elastic element, wherein the torque transmission element comprises: a first annular plate connected in terms of rotation to one of the two elements, rim or hub, and capable of moving axially with respect to thereto, having a first end face in contact with a first end face of the elastic device and a second end face opposite to the first end face and comprising at least one first ramp path having at least one inclined zone forming a circular sector centred on the longitudinal axis and making a non-zero angle with respect to a plane perpendicular to said longitudinal axis, a second annular plate connected in terms of rotation to the other of the two elements, hub or rim, having an end face comprising at least a second ramp path having at least one inclined zone forming a circular sector centred on the longitudinal axis and making a non-zero angle with respect to a plane perpendicular to said longitudinal axis, a retaining cage containing rolling elements such as balls, positioned between the first (1) and the second annular plate so that, depending on the relative rotational position of the rim and of the hub, the deformable elastic device is compressed axially by the combined action of at least one said rolling element and of at least one said inclined zone of each of the first and second annular plates, the axial compression force thus generated being accompanied by a tangential force which is dependent on said angle and which transmits a torque between the first and the second annular plate and therefore between the rim and the hub.

### SUMMARY OF THE INVENTION

The aim of the present invention consists in obviating the above-cited drawback.

The above aim is attained by a brake group (2) for a transmission between a drive shaft and a driven shaft, comprising: a frame; elastic means; a first friction surface which is solidly constrained to the frame; a second friction surface; a first member, rotatable with respect to a first rotation axis and connectable to a driven shaft such as to draw the driven shaft in rotation; a second member, connectable to a drive shaft such as to be drawn in rotation thereby about the first rotation axis; the first member and the second member being further couplable by clutch, such that: the second member can transmit drive to the first member; and a variation in relative angular velocity thereof corresponds to a variation in relative distance thereof; characterised in that: the first member can slide along a parallel direction to the first rotation axis; the elastic means act on the first member such as to guarantee clutching coupling of the first member with the second member; the first member bears the second friction surface; the brake group being configured such that when the angular velocity of the second member diminishes with respect to the angular velocity of the first member, the first member slides along the parallel direction to the first rotation axis until the second friction surface presses against the first friction surface in order to determine the braking of the first member.

The braking action originates from the dragging of the second friction surface against the first clutch surface.

The first member bears the second friction surface; therefore, the braking effect is exerted direction on the first member and therefore also on the driven shaft which is drawn by the first member.

The braking takes place when the angular velocity of the second member diminishes with respect to the angular velocity of the first member. This diminution can be due to a reduction in drive torque applied to the drive shaft or when the engine drawing the drive shaft is halted.

If the angular velocity of the second member falls with respect to the angular velocity of the first member, the first member slides along the parallel direction to the first rotation axis up until the second friction surface presses against the first friction surface and determines the braking of the first member.

Thus, when the angular velocity of the second member drops with respect to the angular velocity of the first member, the braking of the first member follows, tending to reduce the angular velocity of the first member: the reduction of the angular velocity of the first member tends to follow the reduction of the angular velocity of the second member. The direct braking of the first member is advantageously more effective and less brusque than in the prior art.

Wedging phenomena of the coupling surfaces between the first member and the second member are much less probable and frequent with the present invention; a suitable design of the brake group can render wedging phenomena improbable even following an unexpected shut-down of the engine drawing the drive shaft.

In accordance with an embodiment, the elastic means press on the first member to push the first member against the second member and guarantee clutching coupling of the first member against the second member; further, when the angular velocity of the second member falls with respect to the angular velocity of the first member, the first member slides along the parallel direction to the first rotation axis, nearingly to the second member.

Wedging phenomena of the coupling surfaces between the first member and the second member are still less probable: in fact, the first member during the braking stage is not compressed between the second member, on the one side, and the first clutch surface, on the other side; instead, in the prior art, the second member bearing the second friction surface was compressed between the first member, on one side, and the first friction surface, on the other side. A sort of "packing" of the second member might occur, which could lead to an undesired wedging of the first clutching surface of the first member in the second clutching surface of the second member.

In a further embodiment, the first member comprises a first clutching surface, and the second member comprises a second clutching surface, the first clutching surface and the second clutching surface being conformed such as to engage to one another and comprising coupling profiles which make a relative sliding possible, such that the first member can rotate relatively with respect to the second member and at the same time slide along the parallel direction to the first rotation axis. The coupling profiles are inclined with respect to the direction identified by the first rotation axis. Further, the second member is connectable to the drive shaft via a free-wheel mechanism, which free-wheel mechanism is configured such as to make the second member freely rotatable with respect to the drive shaft when the angular velocity of the second member diminishes with respect to the angular velocity of the first member.

When the angular velocity of the second member falls with respect to he angular velocity of the first member, the first member exerts a torque on the second member such as to draw the second member; this is due to the friction established between the friction surfaces. This torque brings the second member to rotate at an angular velocity greater than the velocity of the drive shaft: consequently, the free wheel mechanism intervenes to make the second member freely rotatable with respect to the drive shaft. The second member is thus deconstrained from the drive shaft and drawn by the first member.

Since the first friction surface and the second friction surface have inclined coupling profiles and the elastic means press on the first member, which in turn presses on the second member, it follows that the first member is staggered (and slides) however with respect to the second member up until it is braked.

The braking advantageously acts on the first member, on the second member, having in any case a limited mass, and on the driven shaft; the drive shaft is not braked because it is deconstrained from the second member. The inertia of the rotating masses that are to be braked therefore diminishes; as a consequence, the braking time is also reduced.

### BRIEF DESCRIPTION OF THE DRAWINGS

Specific embodiments of the invention will be described in the following in the present description, according to what is set out in the claims and with the aid of the accompanying tables of drawings, in which:
- figure 1 is an exploded view of a gear box which comprises the brake group according to the present invention;
- figure 1A is an enlarged view of some elements of figure 1;
- figure 2 is a perspective view of a part of the gear box, including the brake group of figure 1;
- figure 3 is a section view of the gear box of figure 1, realised according to a section plane passing through the axis of the input shaft and the output shaft of the gear box;
- figure 4 is a lateral view of figure 2, in which the output shaft of the gear box is not represented and in which the brake group is in a drive transmission configuration;
- figure 5 is a lateral view of what is illustrated in figure 2, in which the output shaft of the gear box is not illustrated and in which the brake group is in a braking configuration.

### DESCRIPTION OF PREFERRED EMBODIMENTS

With reference to the accompanying figures of the drawings, 1 denotes in its entirety the gear box comprising the brake group for a transmission between a drive shaft and a driven shaft, object of the present invention, denoted with reference numeral (2).

The brake group (2) comprises: a frame (3); elastic means (4); a first friction surface (5) which is solidly constrained to the frame (3); a second friction surface (6); a first member (7), rotatable with respect to a first rotation axis (A) and connectable to a driven shaft such as to draw the driven shaft in rotation; a second member (8), connectable to a drive shaft such as to be drawn in rotation thereby about the first rotation axis (A); the first member (7) and the second member (8) being further couplable by clutch, such that: the second member (8) can transmit drive to the first member (7); and a variation in relative angular velocity thereof corresponds to a variation in relative distance thereof. Further, the first member (7) can slide along a parallel direction to the first rotation axis (A); the elastic means (4) act on the first member (7) such as to guarantee clutching coupling of the first member (7) with the second member (8); the first member (7) bears the second friction surface (6); the brake group being configured such that when the angular velocity of the second member (8) diminishes with respect to the angular velocity of the first member (7), the first member (7) slides along the parallel direction to the first rotation axis (A) until the second friction surface (6) presses against the first friction surface (5) in order to determine the braking of the first member (7).

The elastic means (4) can press on the first member (7) such as to push the first member (7) against the second member (8) and to guarantee the clutching coupling of the first member (7) with the second member (8); further, when the angular velocity of the second member (8) diminishes with respect to the angular velocity of the first member (7), the first member (7) slides along the parallel direction to the first rotation axis (A) in a nearing direction to the second member (8).

The first member (7) comprises a first clutching surface (9), and the second member (8) comprises a second clutching surface (10), the first clutching surface (9) and the second clutching surface (10) being conformed such as to engage to one another and comprising coupling profiles which make a relative sliding possible, such that the first member (7) can rotate relatively with respect to the second member (8) and at the same time slide along the parallel direction to the first rotation axis (A).

The coupling profiles are inclined with respect to the direction identified by the first rotation axis (A), as is clear from the figures.

The second member (8) is be connectable to the drive shaft via a free-wheel mechanism, which free-wheel mechanism is configured such as to make the second member (8) freely rotatable with respect to the drive shaft when the angular velocity of the second member (8) diminishes with respect to the angular velocity of the first member (7).

The brake group (2) can comprise a third member (11) which can be: constrainable to the first member (7) such as to rotate solidly therewith with respect to the first rotation axis (A) and such as to enable relative sliding of the first member (7) with respect to the third member (11); connectable to the driven shaft such as to be mechanically interposed between the first member (7) and the driven shaft, the elastic means (4) being interposed between the third member (11) and the first member (7).

The first member (7) can comprise a first truncoconical wall (13) which bears the second friction surface (6) and wherein the frame (3) comprises a second truncoconical wall (12) which bears the first friction surface (5).

The gear box (1) comprises an input shaft (14), connectable to the drive shaft, and an output shaft (15), connectable to the driven shaft.

The drive shaft can be the output shaft of an engine, for example an agricultural tractor engine (not illustrated). The driven shaft can be the shaft of an agricultural user device, for example a lawn mower (not illustrated).

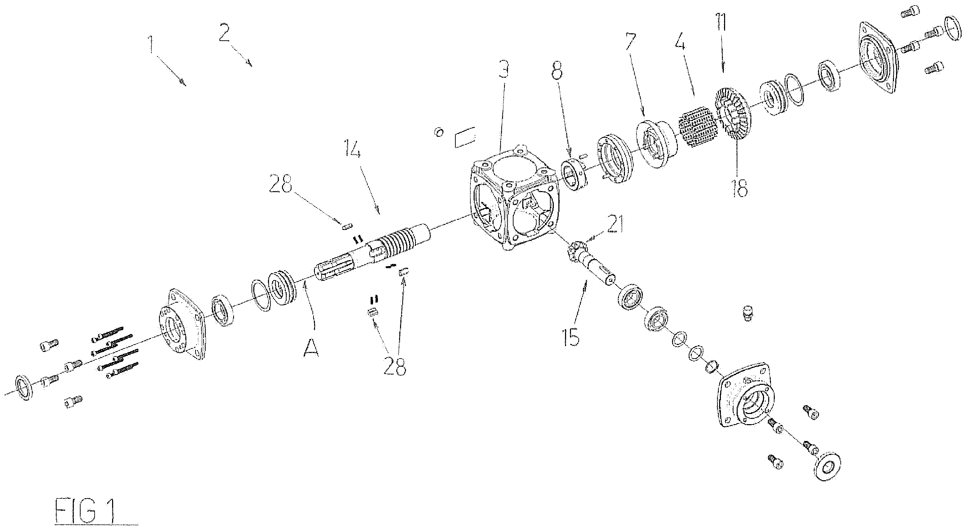

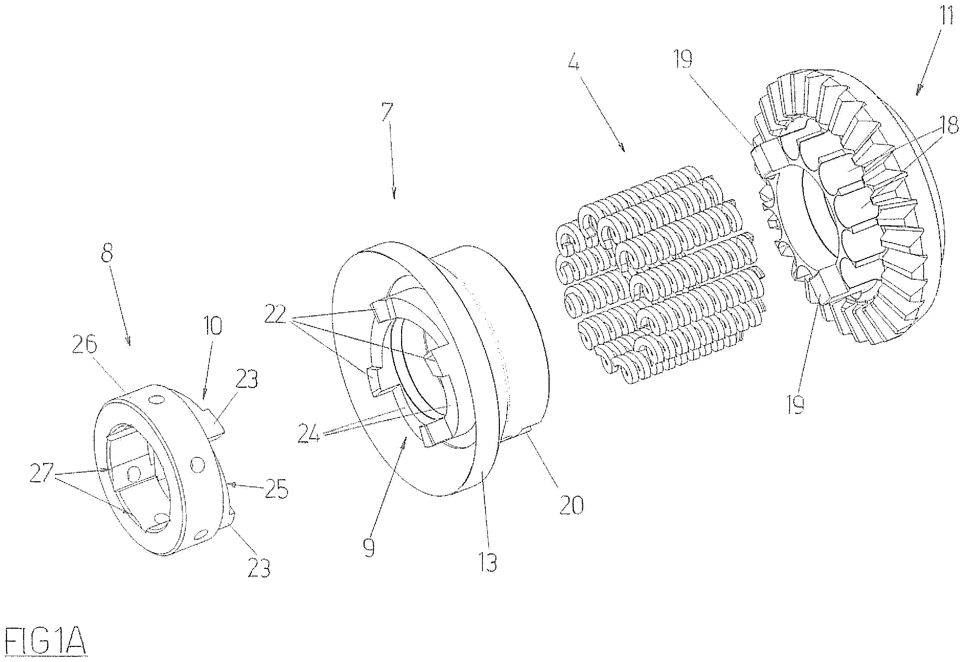

The third member (11) can be a first conical cogwheel (11), having cogs arranged on a first side, in a peripheral position. Further, the first conical cogwheel (11) can be provided with a plurality of seatings for springs (18) arranged on the first side and along a circular profile, in a more internal position with respect to the arrangement of the cogs (figure 1A). At least two projections (19) are provided on the circular profile, which project from the spring (8) seatings; these two projections (19) are tooth-shaped and are arranged diametrically opposite to one another. The projections (19) are conformed such as to engage in corresponding undercuts (20) fashioned in the first member (7); figure 1A illustrates one of these undercuts (20). The projections (19) project in a parallel direction to the first rotation axis (A); similarly, the undercuts (20) develop internally of the first member (7) in a parallel direction to the first rotation axis (A).

The elastic means (4) can be springs (4); in the illustrated example the springs (4) are twelve in number and are destined to be accommodated in the seatings for springs (18) of the first conical cogwheel (11) and to press against a circular wall (not illustrated) of the first member (7).

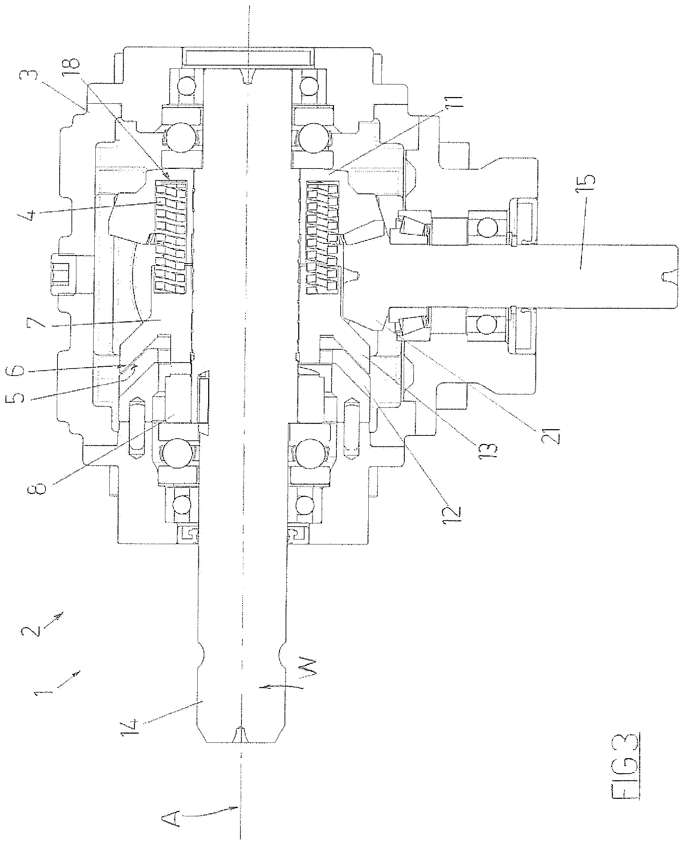

The first conical cogwheel (11) is rotatable with respect to the first rotation axis (A) and associated to the frame (3) by means of bearings of known type, visible in figure 3.

The first conical cogwheel (11) can be provided with a through-hole for free passage of the input shaft (14).

The free end of the output shaft (15) bears a second conical cogwheel (21) having a smaller number of teeth with respect to the first conical cogwheel (11); the second conical cogwheel (21) enmeshes with the first conical cogwheel (11).

The first member (7) can bear the teeth, four in the example shown, having a profile that is inclined with respect to the first rotation axis (A); profiles of a ramp type are fashioned between each tooth, i.e. walls that are also inclined with respect to the first rotation axis (A). The teeth and the inclined profiles mentioned above develop along a ring which forms the first clutching surface (9) of the first member (7).

The first clutching surface (9) is arranged on a first side of the first member (7), while the undercuts (20) for receiving the projections (19) of the first conical cogwheel (11) are arranged on a second side of the first member (7), opposite the first side.

The first truncoconical wall (13) of the first member (7) can externally embrace the first clutching surface (9).

The second clutching surface (10) of the second member (8) is complementary to the first clutching surface (9) and, consequently, also the second clutching surface (10) comprises four teeth and inclined profiles interposed between each tooth.

The second member (8) may be substantially sleeve-shaped (hereinafter the second member may be referred to as a "sleeve"), and the second clutching surface is fashioned on one side thereof (10). The sleeve has a main body (26) which at an inner annular surface whereof exhibits seatings (not visible in the figures) for accommodating the meshing elements (27) and the springs (not visible in the figures). Each meshing element (27) can be sheet-shaped, possibly with an arched profile such as to be able to follow the development of the inner surface of the main body (26) of the sleeve (8) when it engages in the seating thereof, and can perform an angular excursion in elastic contrast with a corresponding spring. Each meshing element (27) can assume two extreme positions: in a first position the meshing element (27) projects from the seating with one side only, while in a second position the meshing element (27) is fully retracted in the seating.

When the meshing elements (27) project from the respective seatings they have the same orientation, and the inner annular surface of the sleeve (8) assumes a shape similar to a plurality of saw teeth arranged in a circular direction; the meshing elements (27) form a part of the free-wheel mechanism. The input shaft (14) bears teeth (28) conformed and arranged angularly such as to engage with the meshing elements (27) of the sleeve (8), such as to complete the free-wheel mechanism; the angular step thereof is identical to the step of the meshing elements (27) of the sleeve (8).

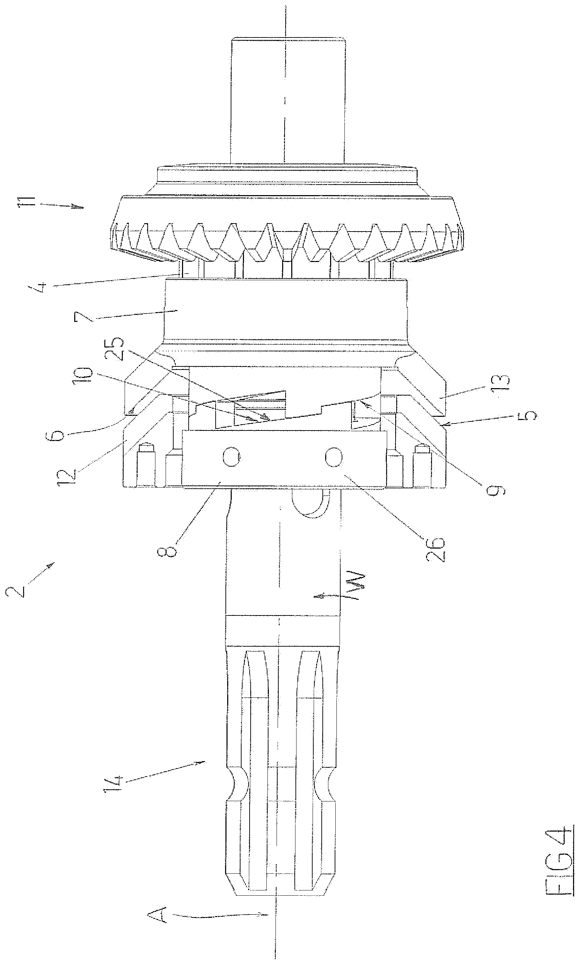

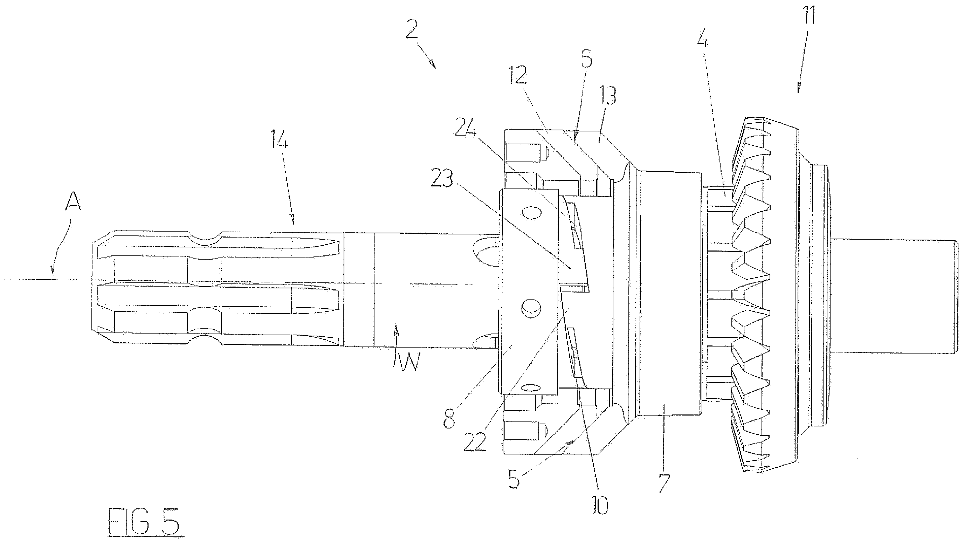

In the example shown, when the input shaft (14) rotates in the direction (W) shown in figures 4, 5, they draw the sleeve (8) in rotation; if the sleeve (8) rotates in the same direction (W) at an angular speed greater than that of rotation of the input shaft (14), then the meshing elements (27) of the sleeve (8) slide freely with respect to the teeth of the input shaft (14), making the sleeve (8) freely rotatable with respect to the input shaft (14), in other words the sleeve (8) is deconstrained from the input shaft (14) with respect to the rotation.

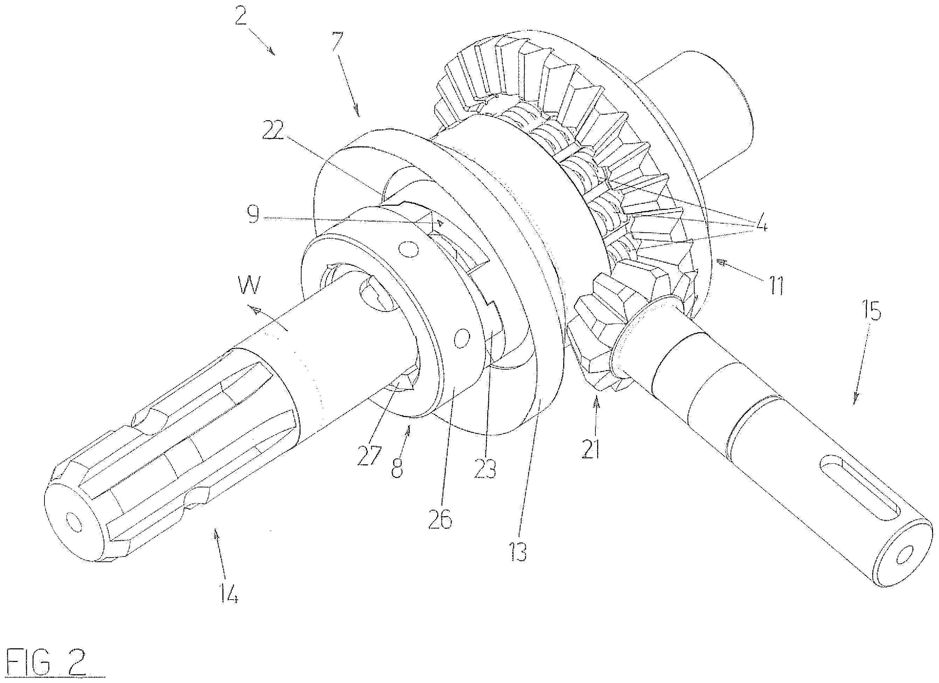

Figures 2, 4 show the brake assembly (2) when it is in a non-active configuration, to which the transmission of motion from the drive shaft to the driven shaft corresponds. The input shaft (14) (mechanically connected to the drive shaft) rotates in the direction (W) such as to transmit a torque, through the second member (8), to the first member (7), the third member (11), the output shaft (15) and the driven shaft. The second member (8) is driven in rotation by the input shaft (14). The teeth (23) of the second meshing surface (10) abut against the teeth (22) of the first clutching surface (9) so that the torque is transmitted from the second member (8) to the first member (7); thanks to the coupling that takes place between the undercuts (20) of the first member (7) and the projections (19) of the third member (11), the first member (7) draws the third member (11) in rotation; the projections (19) are partially inserted in the undercuts (20) during the transmission of motion from the second member (8) to the first member (7). The second friction surface (6) is distanced from the first friction surface (5), solidly constrained to the frame (3).

When the angular velocity of the second member (8) decreases in relation to the angular velocity of the first member (7), for example due to the shutting-off of the engine driving the drive shaft, the first member (7) tends to stagger compared to the second member (8), performing a relative rotation which determines the nearing of the first member (7) to the second member (8) until the second friction surface (6) contacts the first friction surface (5) and the first member (7) is braked. The sliding of the first member (7) with respect to the second member (8) is attributable to the higher inertia that the first member (7) has, due to the fact that it is mechanically connected to the third member (11), to the output shaft (15) and to the driven shaft. The projections (19) of the third member (11) are more inserted, that is to say inserted to a greater depth, in the undercuts (20) of the first member (7).

Owing to the sliding of the first clutching surface (9) of the first member (7) on the second clutching surface (10) of the second member (8), the first member (7) exerts a torque on the second member (8) such as to draw the second member (8); this is due to the friction established between the surfaces of the clutching surfaces. This couple leads the second member (8) to rotate at an angular velocity that is greater than the angular velocity of the input shaft (14) (and therefore also of the drive shaft): consequently, the free-wheel mechanism intervenes to make the second member (8) freely rotatable with respect to the input shaft (14). The second member (8) is thus disengaged from the input shaft (14) and drawn by the first member (7). Since the first surface of the first clutching surface (9) and the second surface of the second clutching surface (10) have inclined coupling profiles and the springs (4) press on the first member (7) which in turn presses on the second member (8), it follows that the first member (7) is staggered (and slides) with respect to the second member (8) until it is braked.

The braking acts on the first member (7), on the second member (8), which latter has however a limited mass (it can be substantially a sleeve, as mentioned), on the output shaft (15) and on the driven shaft; the drive shaft and the input shaft (14) are not braked because the input shaft (14) is deconstrained from the second member (8). The inertia of the rotating masses to be braked therefore decreases, and as a result the braking time also decreases.

The above has been described by way of non-limiting example, and any constructional variants are understood to fall within the protective scope of the present technical solution, as claimed herein below.

## Claims

1. A brake group (2) for a transmission between a drive shaft and a driven shaft, comprising:
a frame (3);
an input shaft (14), connectable to the drive shaft;
elastic means (4);
a first friction surface (5) which is solidly constrained to the frame (3);
a second friction surface (6);
a first member (7), rotatable with respect to a first rotation axis (A) and
connectable to a driven shaft such as to draw the driven shaft in rotation;
a second member (8), connected to the input shaft (14) such as to be drawn in rotation thereby about the first rotation axis (A);
the first member (7) and the second member (8) being further couplable by a clutch, such that: the second member (8) can transmit drive to the first member (7); and a variation in relative angular velocity thereof corresponds to a variation in relative distance thereof;
wherein the first member (7) can slide along a parallel direction to the first rotation axis (A);
the elastic means (4) act on the first member (7) such as to guarantee clutching coupling of the first member (7) with the second member (8);
the first member (7) bears the second friction surface (6);
the brake group is configured such that when the angular velocity of the second member (8) diminishes with respect to the angular velocity of the first member (7), the first member (7) slides along the parallel direction to the first rotation axis (A) until the second friction surface (6) presses against the first friction surface (5) in order to determine the braking of the first member (7), the first member (7) comprises a first clutching surface (9), and the second member (8) comprises a second clutching surface (10), the first clutching surface (9) and the second clutching surface (10) being conformed such as to engage to one another and comprising coupling profiles which make a relative sliding possible, such that the first member (7) can rotate relatively with respect to the second member (8) and at the same time slide along the parallel direction to the first rotation axis (A);
wherein the coupling profiles are inclined with respect to the direction identified by the first rotation axis (A);
**characterised in that**
the second member (8) is connected to the input shaft (14) via a free-wheel mechanism, which free-wheel mechanism is configured such as to make the second member (8) freely rotatable with respect to the input shaft (14) when the angular velocity of the second member (8) diminishes with respect to the angular velocity of the first member (7) until the second friction surface (6) contacts the first friction surface (5) and the first member (7) is braked.

2. The brake group (2) of the preceding claim, wherein: the elastic means (4) press on the first member (7) such as to push the first member (7) against the second member (8) and to guarantee the clutching coupling of the first member (7) with the second member (8); when the angular velocity of the second member (8) diminishes with respect to the angular velocity of the first member (7), the first member (7) runs along the parallel direction to the first rotation axis (A) in a nearing direction to the second member (8).

3. The brake group (2) of any one of the preceding claims, comprising a third member (11) which is: constrainable to the first member (7) such as to rotate solidly therewith with respect to the first rotation axis (A) and such as to enable relative sliding of the first member (7) with respect to the third member (11); connectable to the driven shaft such as to be mechanically interposed between the first member (7) and the driven shaft, the elastic means (4) being interposed between the third member (11) and the first member (7).

4. The brake group (2) of any one of the preceding claims, wherein the first member (7) comprises a first truncoconical wall (13) which bears the second friction surface (6) and wherein the frame (3) comprises a second truncoconical wall (12) which bears the first friction surface (5).

5. A gear box for a transmission between a drive shaft and a driven shaft, comprising the brake group (2) of any one of the preceding claims.

## Patentansprüche

1. Bremsgruppe (2) für eine Übertragung zwischen einer Antriebswelle und einer Abtriebswelle, Folgendes beinhaltend:
einen Rahmen (3);
eine Eingangswelle (14), die mit der Antriebswelle verbindbar ist;
elastische Mittel (4);
eine erste Reibfläche (5), die fest mit dem Rahmen (3) verbunden ist;
eine zweite Reibfläche (6);
ein erstes Glied (7), das um eine erste Drehachse (A) drehbar ist und mit einer Abtriebswelle verbindbar ist, um die Abtriebswelle in eine Drehbewegung zu versetzen; ein zweites Glied (8), das mit der Eingangswelle (14) verbunden ist, um von dieser in eine Drehbewegung um die erste Drehachse (A) versetzt zu werden;
wobei das erste Glied (7) und das zweite Glied (8) ferner mittels einer Kupplung kuppelbar sind, so dass: das zweite Glied (8) den Antrieb auf das erste Glied (7) übertragen kann; und einer Änderung deren relativer Winkelgeschwindigkeit zueinander eine Änderung des relativen Abstands voneinander entspricht;
wobei das erste Glied (7) entlang einer Richtung parallel zu der ersten Drehachse (A) gleitbar ist;
die elastischen Mittel (4) auf das erste Glied (7) wirken, um den kuppelnden Eingriff des ersten Glieds (7) mit dem zweiten Glied (8) sicherzustellen;
das erste Glied (7) die zweite Reibfläche (6) trägt;
die Bremsgruppe derart ausgelegt ist, dass, wenn die Winkelgeschwindigkeit des zweiten Glieds (8) relativ zu der Winkelgeschwindigkeit des ersten Glieds (7) abnimmt, das erste Glied (7) entlang der Richtung parallel zu der ersten Drehachse (A) gleitet, bis die zweite Reibfläche (6) gegen die erste Reibfläche (5) drückt, um das Bremsen des ersten Glieds (7) zu bewirken,
das erste Glied (7) eine erste Kupplungsfläche (9) beinhaltet, und das zweite Glied (8) eine zweite Kupplungsfläche (10) beinhaltet, wobei die erste Kupplungsfläche (9) und die zweite Kupplungsfläche (10) derart gestaltet sind, dass sie miteinander in Eingriff treten und Kupplungsprofile beinhalten, die eine Gleitbewegung relativ zueinander ermöglichen, so dass das erste Glied (7) relativ zu dem zweiten Glied (8) drehen und gleichzeitig entlang der Richtung parallel zu der ersten Drehachse (A) gleiten kann;
wobei die Kupplungsprofile relativ zu der von der ersten Drehachse (A) beschriebenen Richtung geneigt sind;
**dadurch gekennzeichnet, dass**
das zweite Glied (8) mit der Eingangswelle (14) über einen Freilaufinechanismus verbunden ist, welcher Freilaufinechanismus derart ausgelegt ist, dass er bewirkt, dass das zweite Glied (8) relativ zu der Eingangswelle (14) frei drehen kann, wenn die Winkelgeschwindigkeit des zweiten Glieds (8) relativ zu der Winkelgeschwindigkeit des ersten Glieds (7) abnimmt, bis die zweite Reibfläche (6) die erste Reibfläche (5) berührt und das erste Glied (7) gebremst wird.

2. Bremsgruppe (2) nach dem vorhergehenden Anspruch, wobei: die elastischen Mittel (4) auf das erste Glied (7) drücken, um das erste Glied (7) gegen das zweite Glied (8) zu schieben und den kuppelnden Eingriff des ersten Glieds (7) mit dem zweiten Glied (8) sicherzustellen; das erste Glied (7), wenn die Winkelgeschwindigkeit des zweiten Glieds (8) relativ zu der Winkelgeschwindigkeit des ersten Glieds (7) abnimmt, entlang der Richtung parallel zu der ersten Drehachse (A) in Annäherung an das zweite Glied (8) gleitet.

3. Bremsgruppe (2) nach einem der vorhergehenden Ansprüche, beinhaltend ein drittes Glied (11) das: an dem ersten Glied (7) festgelegt werden kann, um gemeinsam mit diesem um die erste Drehachse (A) zu drehen und um das Gleiten des ersten Glieds (7) relativ zu dem dritten Glied (11) zu ermöglichen; mit der Abtriebswelle verbindbar ist, um mechanisch zwischen dem ersten Glied (7) und der Abtriebswelle angeordnet zu werden, wobei die elastischen Mittel (4) zwischen dem dritten Glied (11) und dem ersten Glied (7) angeordnet sind.

4. Bremsgruppe (2) nach einem der vorhergehenden Ansprüche, wobei das erste Glied (7) eine erste kegelstumpfförmige Wand (13) beinhaltet, welche die zweite Reibfläche (6) trägt, und wobei der Rahmen (3) eine zweite kegelstumpfförmige Wand (12) beinhaltet, welche die erste Reibfläche (5) trägt.

5. Getriebe für eine Übertragung zwischen einer Antriebswelle und einer Abtriebswelle, beinhaltend die Bremsgruppe (2) nach einem der vorhergehenden Ansprüche.

## Revendications

1. Un groupe frein (2) pour une transmission entre un arbre menant et un arbre mené, comprenant:
un châssis (3);
un arbre d'entrée (14), pouvant être relié à l'arbre menant;
des moyens élastiques (4);
une première surface de friction (5) qui est solidairement contrainte au châssis (3);
une deuxième surface de friction (6);
un premier organe (7), pouvant tourner par rapport à un premier axe de rotation (A) et pouvant être relié à un arbre mené de manière à entraîner ledit arbre mené en rotation;
un deuxième organe (8), relié à l'arbre d'entrée (14) de manière à être entraîné en rotation par celui-ci autour du premier axe de rotation (A);
le premier organe (7) et le deuxième organe (8) pouvant en outre être accouplés par un embrayage, de manière à ce que : le deuxième organe (8) puisse transmettre le mouvement au premier organe (7) ; et une variation de la vitesse angulaire relative de ceux-ci corresponde à une variation de la distance relative de ceux-ci ;
où le premier organe (7) peut coulisser le long d'une direction parallèle au premier axe de rotation (A) ;
les moyens élastiques (4) agissent sur le premier organe (7) de manière à garantir l'accouplement d'embrayage du premier organe (7) avec le deuxième organe (8) ;
le premier organe (7) porte la deuxième surface de friction (6) ;
le groupe frein est configuré de manière à ce que, lorsque la vitesse angulaire du deuxième organe (8) diminue par rapport à la vitesse angulaire du premier organe (7), le premier organe (7) coulisse le long de la direction parallèle au premier axe de rotation (A) jusqu'à ce que la deuxième surface de friction (6) appuie contre la première surface de friction (5) de manière à déterminer le freinage du premier organe (7),
le premier organe (7) comprend une première surface d'embrayage (9), et le deuxième organe (8) comprend une deuxième surface d'embrayage (10), la première surface d'embrayage (9) et la deuxième surface d'embrayage (10) étant conformées de manière à s'assujettir l'une à l'autre et comprenant des profils d'accouplement qui rendent possible un coulissement relatif, afin que le premier organe (7) puisse tourner relativement par rapport au deuxième organe (8) et coulisser en même temps le long de la direction parallèle au premier axe de rotation (A) ;
où les profils d'accouplement sont inclinés par rapport à la direction identifiée par le premier axe de rotation (A) ;
**caractérisé en ce que**
le deuxième organe (8) est relié à l'arbre d'entrée (14) via un mécanisme de roue libre, ledit mécanisme de roue libre est configuré de manière à permettre au deuxième organe (8) de tourner librement par rapport à l'arbre d'entrée (14) quand la vitesse angulaire du deuxième organe (8) diminue par rapport à la vitesse angulaire du premier organe (7) jusqu'à ce que la deuxième surface de friction (6) soit en contact avec la première surface de friction (5) et que le premier organe (7) soit freiné.

2. Le groupe frein (2) selon la revendication précédente, dans lequel : les moyens élastiques (4) appuient sur le premier organe (7) de manière à pousser le premier organe (7) contre le deuxième organe (8) et à garantir l'accouplement d'embrayage du premier organe (7) avec le deuxième organe (8) ; quand la vitesse angulaire du deuxième organe (8) diminue par rapport à la vitesse angulaire du premier organe (7), le premier organe (7) se déplace le long de la direction parallèle au premier axe de rotation (A) dans une direction d'approche vers le deuxième organe (8).

3. Le groupe frein (2) selon l'une quelconque des revendications précédentes, comprenant un troisième organe (11) qui : peut être assujetti au premier organe (7) de manière à tourner solidairement avec celui-ci par rapport au premier axe de rotation (A) et de manière à permettre un coulissement relatif du premier organe (7) par rapport au troisième organe (11) ; peut être relié à l'arbre mené de manière à être mécaniquement interposé entre le premier organe (7) et l'arbre mené, les moyens élastiques (4) étant interposés entre le troisième organe (11) et le premier organe (7).

4. Le groupe frein (2) selon l'une quelconque des revendications précédentes, dans lequel le premier organe (7) comprend une première paroi troncoconique (13) qui porte la deuxième surface de friction (6) et dans lequel le châssis (3) comprend une deuxième paroi troncoconique (12) qui porte la première surface de friction (5).

5. Une boîte à engrenages pour une transmission entre un arbre menant et un arbre mené, comprenant le groupe frein (2) selon l'une quelconque des revendications précédentes.
